# EUROPÄISCHE PATENTANMELDUNG

(11) **EP 1 790 839 A2**
(43) Veröffentlichungstag der Anmeldung: **30.05.2007**
(21) Anmeldenummer: 06024269.0
(22) Anmeldetag: 23.11.2006
(51) Int. Cl.: F02D 19/06, F02M 37/00

(54) **Verfahren und Vorrichtung zum Steuern einer Zufuhr Pflanzenöl als Kraftstoff**

(30) Priorität: 23.11.2005 DE 102005056117; 07.12.2005 DE 102005058609
(71) Anmelder: DIAMA GmbH, 27432 Bremervörde (DE)
(72) Erfinder: Mahler, Dieter, 27432 Bremervörde (DE)
(74) Vertreter: Eisenführ, Speiser & Partner

(57) **Zusammenfassung**

Es wird ein Verfahren sowie eine Vorrichtung und insbesondere auch ein Motor und ein Fahrzeug erfindungsgemäß vorgeschlagen, das abhängig von einer Motordrehzahl, Abtriebsdrehzahl oder Fahrzeuggeschwindigkeit zwischen Dieselbetrieb und Pflanzenölbetrieb, insbesondere Rapsölbetrieb umgeschaltet wird, und das dadurch eine ungünstige Zuführung von Rapsöl zum Motor vermeidet.

## Beschreibung

Die vorliegende Erfindung betrifft ein Verfahren und eine Vorrichtung zum Steuern einer Kraftstoffzufuhr für einen Verbrennungsmotor für die Nutzung von Pflanzenölen, insbesondere Rapsöl, und Diesel als Kraftstoff. Weiterhin betrifft die Erfindung einen Motor mit einem genannten Verfahren und/oder einer genannten Vorrichtung. Weiterhin betrifft die Erfindung ein Fahrzeug, insbesondere einen LKW, mit einem genannten Verfahren und/oder oder einer genannten Vorrichtung und/oder einem genannten Motor.

Es ist bekannt, dass Dieselmotoren, insbesondere für LKWs und andere Nutzfahrzeuge unter bestimmten Voraussetzungen mit Pflanzenöl, insbesondere Rapsöl betrieben werden können. Zur Verwendung von Rapsöl ist es jedoch erforderlich, dass der Motor seine Betriebstemperatur erreicht hat und erst dann Rapsöl als Kraftstoff zugeführt wird. Dies ist erforderlich, da andernfalls im Motor keine optimale Verbrennung des Rapsöls erfolgen würde und Rapsölrückstände somit in die Ölwanne gelangen könnten, was wiederum zum Verklumpen des Motoröls und somit zum Verhindern des Schmiereffekts führen könnte. Die Folge hiervon wäre ein Motorschaden.

Es ist bekannt, zur Vermeidung solcher Effekt das Rapsöl erst dem Motor als Kraftstoff zur Verfügung zu stellen, wenn die Betriebstemperatur erreicht ist. Es erfolgt somit eine Umschaltung von Diesel auf Rapsöl bei Erreichen der Betriebstemperatur.

Nachteilig ist hierbei, dass trotz Erreichens der Betriebstemperatur Betriebszustände auftreten können, bei denen eine optimale Verbrennung des Rapsöls nicht gewährleistet werden kann und somit auch dann die Gefahr eines Motorschadens besteht. Solche Betriebszustände entstehen insbesondere beim Leerlauf des Motors, wie beispielsweise im Falle eines Kraftfahrzeugs bei Standzeiten an einer Ampel oder im Stau.

Darüber hinaus tritt das Problem auf, dass in gemeinsamen Zuführelementen für Rapsöl und Diesel, durch die je nach Betrieb Rapsöl oder Diesel fließt, Rapsöl verbleibt, wenn das Fahrzeug direkt nach dem Betrieb mit Rapsöl abgestellt wird. Beim wieder in Betrieb nehmen der Anlage, insbesondere eines Fahrzeugs wird in diesem Fall der Motor mit diesem verbliebenen Rapsölanteilen gestartet werden. Der Motor, der beim Starten noch nicht die Betriebstemperatur erreicht hat, würde hierdurch Schaden nehmen. Zur Verhinderung dieses Problems ist es bekannt, eine manuelle Umschaltmöglichkeit vorzusehen, bei der vor Abschalten des Motors zunächst manuell auf Dieselbetrieb umgeschaltet wird und der Motor in diesem Dieselbetrieb noch eine Weile von etwa 30 Sekunden bis zu 1 Minute läuft, um hierdurch die Rapsölreste aus den gemeinsamen Kraftstoffzuführungen zu spülen.

Nachteilig hierbei ist jedoch, dass ein Betrieb des Motors mit Rapsöl bei nicht optimalen Verbrennungsbedingungen zur Vermeidung eines Motorschadens immer vermieden werden muss, so dass bereits ein einmaliges Vergessen der beschriebenen Spülung vorm Abschalten des Motors einen Motorschaden - wenn auch erst später - bedingen kann. Durch die manuell zu betätigende Spülung ist deren Durchführung somit nicht sichergestellt.

Im Zusammenhang mit der gemeinsamen Nutzung von Zuführ- und Rückführelementen durch Diesel und Pflanzenöl besteht zudem das Problem, dass beim Umschalten von Rapsöl- auf Dieselbetrieb die Rapsölreste in den Zuführ- und/oder Rückführelementen in den Dieseltank zurückfließen und so direkt aus dem Dieseltank Rapsöl im Dieselbetrieb in den Motor gelangen können. Somit kann Rapsöl in den Motor gelangen, wenn keine für die optimale Verbrennung von Rapsöl notwendigen Betriebsbedingungen vorliegen. Dieses Problem ist bisher nicht gelöst.

Aufgabe der vorliegenden Erfindung ist es somit, die vorbeschriebenen Nachteile zu vermeiden. Insbesondere soll eine Lösung geschaffen werden, bei der vermieden werden soll, dass Rapsöl oder anderes Pflanzenöl bei hierfür ungeeigneten Betriebsbedingungen in den Motor gelangt.

Erfindungsgemäß wird vorgeschlagen, ein Verfahren zum Steuern einer Kraftstoffzufuhr für einen Verbrennungsmotor für die Nutzung von Pflanzenöl, insbesondere Rapsöl, und Diesel Kraftstoff einzusetzen, das dadurch gekennzeichnet ist, dass eine Umschaltung zwischen der Zufuhr von Pflanzenöl und Diesel in Abhängigkeit von der Motordrehzahl und/oder einer Abtriebsdrehzahl erfolgt. Erfindungsgemäß wurde erkannt, dass die Motordrehzahl eine entscheidende Rolle für die Beurteilung eines für Pflanzenöl, insbesondere Rapsöl geeigneten Betriebszustands des Motors spielt.

Wenn zwischen dem Motor und einer Abtriebsseite eine Kupplung vorhanden ist, kann es vorteilhaft sein beim Abkuppeln, wenn der Motor unter eine Grenzdrehzahl abfällt, keine Umschaltung zwischen Pflanzenöl auf Dieselbetrieb vorzunehmen. Dies ist darin begründet, dass in vielen Anwendungen, wie beispielsweise beim Betreiben eines Kraftfahrzeugs nur kurzzeitig gekuppelt wird, um die Gänge zu wechseln, was regelmäßig bei durchgehendem Rapsölbetrieb ohne nennenswerten Schaden für den Motor durchgeführt werden kann. In dem genannten Beispiel eines Kraftfahrzeugs stellen die Antriebsräder die Abriebsseite dar. Somit wird auch bevorzugt ein Verfahren vorgeschlagen, bei dem dieses in einem Fahrzeug eingesetzt wird und eine Umschaltung zwischen der Zufuhr von Pflanzenöl und Diesel in Abhängigkeit der Geschwindigkeit des Fahrzeugs erfolgt. Bei kurzzeitigem Kuppeln zum Wechseln der Gänge, wird auch dann, wenn die Motordrehzahl kurzzeitig auf eine niedrige Drehzahl abfällt ein Umschalten von Pflanzenöl auf Dieselbetrieb und zurück vermieden. Es kommt hinzu, dass mitunter die Messung der Geschwindigkeit einfacher oder kostengünstiger vorgenommen werden kann als die Messung bzw. Bestimmung der Motordrehzahl.

Bevorzugt erfolgt die Umschaltung abhängig von einer Temperatur, insbesondere einer Motortemperatur.

Bevorzugt wird ein Umschalten nicht nur in Abhängigkeit der Geschwindigkeit durchgeführt, sondern beispielsweise auch in Abhängigkeit einer weiteren Messgröße wie zum Beispiel der Motortemperatur. Wichtig ist, dass bei kritischen Betriebswerten möglichst Dieselbetrieb eingestellt ist. Somit soll erst auf Pflanzenölbetrieb umgeschaltet werden, wenn die Geschwindigkeit hoch genug ist. Ist die Geschwindigkeit nicht hoch genug, soll nicht umgeschaltet werden. Jedoch kann auch bei Überschreiten einer Grenzgeschwindigkeit der Dieselbetrieb beibehalten werden, falls andere Betriebsparameter wie beispielsweise die Motortemperatur dies vorsehen. Umgekehrt soll von Pflanzenölbetrieb auf Dieselbetrieb zurückgeschaltet werden, wenn die Geschwindigkeit unter eine Grenzgeschwindigkeit abfällt. Es kann jedoch auch bei höherer Geschwindigkeit auf Dieselbetrieb zurückgeschaltet werden, wenn dies andere Parameter vorsehen.

Vorzugsweise wird zur Umschaltung ein Messsignal von einem Antriebsstrang aufgenommen und/oder ausgewertet. Bei einem Kraftfahrzeug umfasst ein Antriebsstrang grundsätzlich ein Getriebe, eine Kardanwelle, ein Differentialgetriebe und eine Achse. Hiervon wird zumindest ein Messwert aufgenommen bzw. ausgewertet. Es liegt die Überlegung zugrunde, dass die Drehzahl des Antriebsstrangs, also eines der genannten Elemente, proportional zumindest etwa proportional zur Geschwindigkeit des Fahrzeugs ist und somit über einen einfachen Faktor die Geschwindigkeit zumindest annähernd berechenbar wäre. Ebenso kann anstelle einer Geschwindigkeit direkt ein Wert für die umgerechnete Drehzahl des Antriebsstrangs bzw. der genannten Elemente als Grenzwert zum Umschalten festgelegt werden.

Weitere bevorzugte Möglichkeiten bestehen darin, ein Geschwindigkeitssignal von einem ABS-Modul zu verwenden um somit einen zusätzlichen Sensor einzusparen. Ebenso kann ein Tachosignal verwendet werden oder hilfsweise durch einen einfachen Sensor die Geschwindigkeit an einer Tachowelle bestimmt und umgerechnet werden. Ebenso ist ein spezieller Sensor grundsätzlich einsetzbar, der eine Messung einer Bewegung des Fahrzeugs gegenüber dem Untergrund vornimmt und auswertet. Je nach Genauigkeit eines verfügbaren GPS-Signals ist auch dieses zur Bestimmung der Geschwindigkeit des Fahrzeugs einsetzbar. Entsprechend wird gemäß einer Ausführungsform ein GPS-Gerät zum Messen der Geschwindigkeit eingesetzt.

Grundsätzlich wird somit eine Vorrichtung zum Steuern einer Kraftstoffzufuhr für einen Verbrennungsmotor für die kombinierte Nutzung von Rapsöl und Diesel als Kraftstoff vorgeschlagen, bei der ein Modul zum Erfassen einer Geschwindigkeit vorgesehen ist. Ein solches Modul stellt einen Sensor zum Messen der Geschwindigkeit bzw. anderer zur Geschwindigkeit proportionaler Bewegungen bereit und/oder wertet vorhandene Signale über die Geschwindigkeit oder entsprechende Bewegungen aus. Die Vorrichtung kann auch einen Prozessrechner umfassen.

Ein geeigneter Betriebszustand liegt gemäß einer Ausführungsform grundsätzlich dann vor, wenn die Motortemperatur auf oder über einer vorgegebenen Temperatur und die Motordrehzahl auf oder über einer vorgegebenen Drehzahl liegt. Günstig ist dann eine Umschaltung von Diesel auf Pflanzenöl nur, wenn eine vorgegebene Temperatur und eine vorgegebene Drehzahl erreicht oder überschritten wird. Somit erfolgt bevorzugt eine Umschaltung auf Diesel, wenn eine vorgegebene Temperatur (Umschalttemperatur) und/oder eine vorgegebene Drehzahl unterschritten wird. Es muss dann also für einen möglichst sicheren Betrieb mit Rapsöl sowohl die Motortemperatur als auch die Motordrehzahl einen bestimmten Wert erreicht haben. Der Wert für die vorgegebene Drehzahl liegt dabei vorzugsweise im Bereich von 700 bis 900 Umdrehungen pro Minute und insbesondere im Bereich von 800 Umdrehungen pro Minute. Als günstiger Wert für die vorgegebene Temperatur hat sich ein Wert von etwa 70°C der Kühlmitteltemperatur erwiesen.

Im Falle eines Kraftfahrzeugs liegt somit beim Starten zunächst sowohl die Motortemperatur unter ihrer Umschalttemperatur als auch die Motordrehzahl unter einer vorgegebenen Drehzahl zum Umschalten (Umschaltdrehzahl). Der Motor startet somit im Dieselbetrieb. Nach einer Zeit erreicht der Motor beim Fahren seine Umschalttemperatur und schaltet dann, sofern die Motordrehzahl auf oder über der Umschaltdrehzahl liegt auf Betrieb mit Pflanzenöl, insbesondere Rapsöl um. Kommt das Fahrzeug nun beispielsweise aufgrund einer Ampel oder eines Staus zum Stehen, verlangsamt sich der Motor auf seine Leerlaufdrehzahl, die unter der Umschaltdrehzahl liegt. Als Folge wird auf Dieselbetrieb zurückgeschaltet. Der Motor, der trotz erreichter Umschalttemperatur aufgrund seines Leerlaufbetriebs keine optimale Verbrennung des Pflanzenöls, insbesondere Rapsöls gewährleisten kann wird durch das Umschalten auf Diesel insoweit vor Schaden bewahrt.

Ein für den Betrieb mit Rapsöl oder anderem Pflanzenöl geeigneter Betriebszustand kann sich, bei geeigneter Motortemperatur, auch ergeben, ohne dass das Gaspedal im Fahrzeug im bestimmten Maße betätigt wird. Ein solcher Fall ergibt sich beispielsweise dann, wenn das Fahrzeug noch eine hohe Fahrgeschwindigkeit aufweist, aus der es durch den Motor abgebremst wird, oder beispielsweise auch wenn bei einer Bergabfahrt der Motor zum Bremsen des Fahrzeugs eingekuppelt ist. Auch solche Situationen werden über die Berücksichtigung der Motordrehzahl erfasst.

Zusätzlich zu der Zufuhr des Kraftstoffs sind im Kraftstoffkreislauf Elemente enthalten, wie beispielsweise eine Kraftstoffpumpe oder Einspritzdüsen, die zu zumindest einer teilweisen Rückführung von in ihnen enthaltenen Kraftstoff führen. Der hierdurch rückgeführte Kraftstoff fließt grundsätzlich im Dieselbetrieb in den Dieseltank zurück und im Pflanzenölbetrieb in den Pflanzenöltank zurück.

Um eine solche Funktionsweise gewährleisten zu können, wird bevorzugt bei einer Umschaltung der Zufuhr auch eine Umschaltung eines solchen Rücklaufs vorgenommen, wobei die Umschaltung des Rücklaufs bevorzugt zeitverzögert erfolgt. Hierdurch erfolgt beispielsweise bei einer Umschaltung von Rapsöl auf Dieselbetrieb zunächst eine Zufuhr von Diesel statt bisher Rapsöl. Die noch in der Zufuhr und Rückfuhr enthaltenen Reste von Rapsöl fließen bei zeitverzögerter Umschaltung der Rückfuhr zunächst weiter in den Rapsöltank zurück. Erst nach einer gewissen Zeitverzögerung erfolgt auch die Rückfuhr dann in den Dieseltank. Die Zeitverzögerung liegt bevorzugt im Bereich von 20 bis 40 Sekunden, insbesondere bei 30 Sekunden. Es wird also bei jeder Umschaltung für ca. 30 Sekunden gespült. Dabei ist diese Zeitverzögerung möglichst so bemessen, dass im genannten Beispiel die verbliebenen Rapsölreste noch in den Rapsöltank zurückfließen und dann, wenn keine oder nur noch wenig Rapsölreste in der Zu- und Rückführung enthalten sind, die Umschaltung erfolgt. Somit fließt der Dieselkraftstoff dann in den Dieseltank zurück. Somit kann eine gemeinsame Kraftstoffpumpe für Diesel und Pflanzenöl verwendet und auf eine zusätzliche Kraftstoffpumpe für Pflanzenöl verzichtet werden.

Eine solche Umschaltung der Zufuhr und des Rücklaufs wird vorzugsweise durch zwei Dreiwegeventile durchgeführt, wobei zur Umschaltung der Zufuhr ein Dreiwegeventil und zur Umschaltung des Rücklaufs ein weiteres Dreiwegeventil geschaltet werden kann. Es ist daher vorzugsweise für die Zuführung ein Dreiwegeventil mit zwei funktionellen Eingängen versehen, wobei ein Eingang mit einer Dieselzuleitung und ein Eingang mit einer Pflanzenölzuleitung verbunden ist, zwischen denen dieses Dreiwegeventil schaltet. Der Ausgang dieses Dreiwegeventils führt dann insbesondere über eine weitere Kraftstoffpumpe und Einspritzdüsen zum Motor.

Für den Rücklauf ist ein weiteres Dreiwegeventil mit einem funktionalen Eingang für den Rücklauf beispielsweise von der Kraftstoffpumpe und den Einspritzdüsen vorhanden. Weiterhin weist dieses Ventil zwei Ausgänge auf, von denen ein Ausgang über entsprechende Rückleitungen zum Dieseltank und der andere zum Pflanzenöltank führt.

Vorzugsweise wird bei der Zufuhr sowohl für die Dieselzufuhr als auch die Pflanzenölzufuhr jeweils wenigstens ein spezieller Filter für den jeweiligen Kraftstoff vorgesehen sein, der vor dem Dreiwegeventil in der Zuführung angeordnet ist. Speziell für die Zuführung des Pflanzenöls, insbesondere des Rapsöls, wird ein Filter mit Wasserabscheider verwendet. Ein solcher Filter kann beispielsweise eine Ablassöffnung für das herausgefilterte Wasser umfassen. Aus einem solchen Filter ist das Ablassen von Wasser, bei dem auch die Möglichkeit besteht, dass zusätzlich ein Teil des Pflanzenöls herausläuft, an beliebigen Stellen in der Umgebung möglich, da bei Pflanzenöl grundsätzlich wenig Gefahr einer Umweltverschmutzung besteht.

Sämtliche Betriebszustände des Motors sind grundsätzlich zum Betrieb geeignet, wobei Diesel in der Regel jedoch teurer als Pflanzenöl insbesondere Rapsöl ist. Somit wird bevorzugt bei einem Störfall und/oder Ausfall der Steuerung und/oder bei Leerlaufen eines Rapsöltanks eine Umschaltung auf Diesel durchgeführt. Ein solcher Störfall kann beispielsweise ein Fehler bei der Temperatur und/oder Drehzahlerfassung sein. Ebenfalls soll beim Ausfall der Steuerung, was beispielsweise durch einen Ausfall ihrer Stromversorgung auftreten kann, eine Umschaltung in den Dieselbetrieb erfolgen, falls nicht bereits Dieselbetrieb vorliegt. Für eine solche Umschaltung werden Ventile eingesetzt und so angeschlossen, dass diese bei Ausbleiben der Ansteuerung, also beispielsweise bei Ausbleibender Ansteuerspannung, auf Dieselbetrieb schalten bzw. in diesem bleiben. Eine solche Umschaltung kann beispielsweise mechanisch durch eine Federvorspannung durchgeführt werden.

Auch bei Leerlaufen eines Pflanzenöltanks bzw. bei bereits leerem Pflanzenöltank soll eine Umschaltung auf Diesel erfolgen. Für eine solche Umschaltung kann auch ein manueller Umschaltmechanismus vorgesehen sein. In diesem Fall ist eine manuelle Umschaltung unkritisch, da bei leerem Pflanzenöltank entsprechend keine Gefahr besteht, versehentlich den Motor mit Pflanzenöl zu betreiben. Es ist zu beachten, dass im Beispiel eines Kraftfahrzeugs grundsätzlich auf eine ausreichende Betankung mit Dieselkraftstoff geachtet werden muss, da im Zweifel der Motor mit Diesel alleine betrieben werden kann. Hingegen ist das Betreiben des Fahrzeugs mit Pflanzenöl alleine in aller Regel nicht ohne Gefährdung des Motors möglich. Es kommt hinzu, dass zumindest zur Zeit der Anmeldung eine flächendeckende Versorgung mit Dieselkraftstoff nicht jedoch mit Pflanzenöl vorhanden ist.

Zur Berücksichtigung der Drehzahl und/oder der Temperatur wird bevorzugt ein parametrierbares Sondermodul (PSM) verwendet. Ein solches Modul stellt eine Vielzahl von Informationen über den Motor und bei Fahrzeugen über die Fahrzeuge zur Verfügung. Beispielweise kann eine von der Motordrehzahl abhängige, insbesondere zu dieser proportionale elektrische Spannung ausgegeben werden, von der aus eine Umschaltung der Kraftstoffzufuhr und/oder des Rücklaufs beispielsweise mittels eines Relais erfolgen kann. Auf ähnlicher Weise kann auch die Motortemperatur für das erfindungsgemäße Verfahren Berücksichtigung finden. Eine die Drehzahl und/oder die Temperatur beschreibende elektrische Spannung ist jedoch auch auf eine Vielzahl anderer Varianten erzeugbar. Beispielsweise können insbesondere in Fahrzeugen vorhandene Spannungsausgänge, oder auch andere Informationen über die Drehzahl und/oder Temperatur verwendet werden. Ebenso können spezielle Geräte, wie beispielsweise zur Erfassung der Drehzahl ein Tachogenerator eingesetzt werden. Bevorzugt ist eine Anzeige der Funktion der Anlage, insbesondere der Steuerung über Kontrolldioden vorgesehen.

Die beschriebene Berücksichtigung der Temperatur und/oder die Beschreibung weiterer Merkmale der Erfindung im Zusammenhang mit der Motordrehzahl ist bzw. sind sinngemäß auf eine Berücksichtigung im Zusammenhang mit bzw. eine Kombination mit der Geschwindigkeit und/oder der Abtriebsdrehzahl übertragbar und umgekehrt.

Weiterhin ist es vorteilhaft, eine Vorrichtung und/oder einen Motor und/oder ein Fahrzeug, insbesondere ein LKW gemäß einem oder mehrerer der Ansprüche 10 bis 14 zu verwenden.

Nachfolgend wird die Erfindung anhand eines Beispiels unter Bezugnahme auf die beiliegende Figur näher erläutert.

Es zeigt:

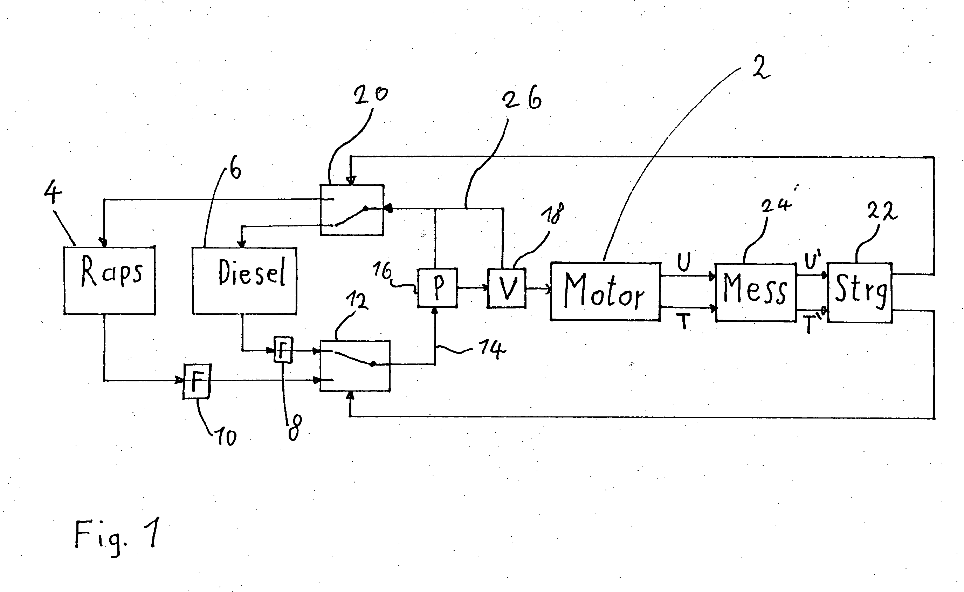

- Figur 1:: eine Anlage zur Durchführung eines erfindungsgemäßen Verfahrens in einer schematischen Darstellung.

Die Figur 1 zeigt schematisch einen Motor 2, der mit Rapsöl oder Diesel betreibbar ist. Hierfür ist ein Rapsöltank 4 und ein Dieseltank 6 vorgesehen. Der Rapsöltank sowie die Rapsölleitungen werden über den Kühlkreislauf beheizt. Es braucht also nur das Kühlmittel zur Motorkühlung hierzu durch den Tank und an den Leitungen entlanggeführt zu werden. Gleichzeitig verbessert sich die Motorkühlung.

Der jeweilige Kraftstoff wird entweder aus dem Dieseltank 6 über den Dieselfilter 8 oder aus dem Rapsöltank 4 über den Rapsölfilter 10 am Dreiwegezuführventil 12 bereitgestellt. Vom Dreiwegezuführventil 12 gelangt dann der jeweilige Kraftstoff über die Zuführleitung 14 zur Kraftstoffpumpe 16 und von dort über Einspritzventile 18 in den Motor 2. Die Reste des jeweiligen Kraftstoffs, die in der Zuführleitung 14, der Kraftstoffpumpe 16 und ggf. den Einspritzventilen 18 vorhanden sind, werden zum Dreiwegerückführventil 20 geleitet. Von dem Dreiwegerückführventil 20 gelangt der zurückzuführende Kraftstoff dann entweder in den Dieseltank 6 oder den Rapsöltank 8.

Das Dreiwegezuführventil 12 und das Dreiwegerückführventil 20 werden grundsätzlich über die Steuerung 22 geschaltet. Es ist jedoch zu beachten, dass beide Dreiwegeventile 12 und 20 eine Grundstellung für Dieselbetrieb aufweisen. In der Grundstellung wird also durch das Dreiwegezuführventil 12 Dieselkraftstoff zugeführt und über das Dreiwegerückführventil 20 der zurückgeführte Kraftstoff in den Dieseltank 6 geleitet.

Die eingesetzte Steuerung 22 erhält zur Durchführung der Ansteuerung von einem Messelement 24 ein Messsignal U' als Information über die Motordrehzahl und das Messsignal T' als Information über die Motortemperatur. Diese Messsignale U' und T' sind dabei im Wesentlichen proportional zu der entsprechenden Drehzahl bzw. Temperatur.

Das Messelement 24 erhält wiederum die Drehzahl U und die Temperatur des Motors T, für die die Temperatur des Kühlmittels zum Motorkühlen verwendet wird, als Istwerte von dem Motor, wobei die tatsächliche Erfassung durch entsprechende Sensoren erfolgt.

In der Steuerung 22 sind nun ein Wert für die Umschaltdrehzahl und ein Wert für die Umschalttemperatur gespeichert, die auch geändert werden können. Wenn nun beim Starten des Motors zunächst die Drehzahl U und Temperatur T unter der Umschaltdrehzahl bzw. der Umschalttemperatur liegen, startet der Motor im dargestellten Dieselbetrieb und verbleibt zunächst in diesem. Es werden nun kontinuierlich die Werte der Istdrehzahl und der Istmotortemperatur U, T über die repräsentativen Werte U', T' in der Steuerung mit den jeweiligen Sollwerten, nämlich der Umschaltdrehzahl und der Umschalttemperatur verglichen. Erst wenn die Umschalttemperatur erreicht bzw. überschritten ist und die Umschaltdrehzahl erreicht bzw. Überschritten ist erfolgt ein Wechsel in den Rapsölbetrieb. Hierzu wird zunächst das Dreiwegezuführventil 12 umgeschaltet, so dass aus dem Rapsöltank 4 über den Rapsölfilter 10 Rapsöl zur Zuführungsleitung 14 zugeführt wird. In der Zwischenzeit wird der in den Zuführ- und Rückführleitungen enthaltene Kraftstoff über das Dreiwegerückführventil 20 weiterhin in den Dieseltank 6 zurückgeführt. Erst nach einer Verzögerungszeit, die etwa 30 Sekunden beträgt, erfolgt auch eine Umschaltung des Dreiwegerückführventils 20, so dass dann auch der zurückgeführte Kraftstoff bei dem es sich nun im Wesentlichen um Rapsöl handelt, in den Rapsöltank 4 zurückgeführt.

Unterschreitet nun die Drehzahl die Umschaltdrehzahl oder die Temperatur die Umschalttemperatur oder werden sogar beide Werte unterschritten, so erfolgt zunächst eine Umschaltung des Dreiwegezuführventils 12 zurück zum Dieselbetrieb und nach einer Verzögerungszeit auch eine Umschaltung des Dreiwegerückführventils 20 zurück in den Dieselbetrieb, nachdem etwa die Reste des Rapsöls zurück in den Rapsöltank 4 geströmt sind.

Eine solche Umschaltung vom Rapsölbetrieb zurück in den Dieselbetrieb erfolgt insbesondere auch bei bzw. vor Abstellen des Motors. Hierbei wird, falls nicht schon vorhanden, zunächst das Dreiwegezuführventil 12 auf Dieselbetrieb geschaltet und dann der Motor noch eine Weile laufen gelassen, meist in Leerlaufdrehzahl, bis der Dieselkraftstoff insbesondere in der Zuführleitung 14 und der Kraftstoffpumpe 16 und den Einspritzventilen 18 und auch in die Rückführleitungen 26 gelangt ist. Erst jetzt erfolgt das Abschalten des Motors 2. Somit wird sichergestellt, dass beim Wiedereinschalten des Motors aufgrund der Grundstellung der beiden Dreiwegeventile 12 und 20 der Dieselbetrieb voreingestellt ist und außerdem in den Zuleitungen einschließlich Kraftstoffpumpe und Einspritzventile dieser Kraftstoff bereit steht und somit beim Wiedereinschalten der Motor nur mit Diesel arbeitet.

Die in der Figur 1 gezeigte Anlage zur Durchführung eines erfindungsgemäßen Verfahrens geht bei der Umschaltung aus von einer Temperatur T und einer Motordrehzahl U. Anstelle der Motordrehzahl U wird in einem anderen Beispiel die Abtriebsdrehzahl oder eine Geschwindigkeit verwendet. In dem Beispiel wird dann weiterhin die Temperatur von dem Motor verwendet, jedoch die Geschwindigkeit aus der Bewegung eines Antriebsstrangs ermittelt, wofür in dem einen Beispiel ein entsprechendes Signal von einem ABS-Modul verwendet wird. Ein solches Signal kann bevorzugt bei der Auswertung geglättet werden, um beispielsweise bei einer kurzzeitigen ABS-Stotterbremsung nicht eine Vielzahl von Umschaltsignalen zu produzieren. Eine solche Glättung ist beispielsweise über ein digitales Programm in einem Prozessrechner oder eine einfache RC-Schaltung für ein elektrisches Signal umsetzbar.

Es wird somit ein Verfahren sowie eine Vorrichtung und insbesondere auch ein Motor und ein Fahrzeug erfindungsgemäß vorgeschlagen, das auf eine Weise zwischen Dieselbetrieb und Pflanzenölbetrieb, insbesondere Rapsölbetrieb umschalten kann, dass eine ungünstige Zuführung von Rapsöl zum Motor vermeidet.

Durch die vorliegende Erfindung soll somit ein sicherer Betrieb eines Motors bei Verwendung von Diesel und Pflanzenöl erreicht werden, um somit die Vorzüge, insbesondere Kostenvorzüge von Rapsöl auszunutzen, ohne dabei eine Gefährdung des Motors, insbesondere einen Motorschaden zu riskieren.

## Patentansprüche

1. Verfahren zum Steuern einer Kraftstoffzufuhr für einen Verbrennungsmotor für die Nutzung von Pflanzenöl, insbesondere Rapsöl und Diesel als Kraftstoff,
**dadurch gekennzeichnet, dass**
eine Umschaltung zwischen der Zufuhr von Pflanzenöl und Diesel in Abhängigkeit von der Motordrehzahl und/oder einer Abtriebsdrehzahl erfolgt.

2. Verfahren nach Anspruch 1 oder nach dem Oberbegriff von Anspruch 1, **dadurch gekennzeichnet, dass** das Verfahren in einem Fahrzeug eingesetzt wird und dass eine Umschaltung zwischen der Zufuhr von Pflanzenöl und Diesel in Abhängigkeit der Geschwindigkeit des Fahrzeugs erfolgt.

3. Verfahren nach Anspruch 1 oder 2, **dadurch gekennzeichnet, dass** die Umschaltung abhängig von einer Temperatur, insbesondere einer Motortemperatur erfolgt.

4. Verfahren nach einem der vorstehenden Ansprüche, **dadurch gekennzeichnet, dass** eine Umschaltung von Diesel auf Pflanzenöl nur erfolgt, wenn eine vorgegebene Temperatur und eine vorgegebene Drehzahl erreicht oder überschritten wird.

5. Verfahren nach einem der vorstehenden Ansprüche, **dadurch gekennzeichnet, dass** eine Umschaltung auf Diesel erfolgt, wenn eine vorgegebene Temperatur und/oder eine vorgegebene Drehzahl unterschritten wird.

6. Verfahren nach einem der vorstehenden Ansprüche, **dadurch gekennzeichnet, dass**. die vorgegebene Drehzahl im Bereich von 700-900 U/min liegt, insbesondere 800 U/min beträgt.

7. Verfahren nach einem der vorstehenden Ansprüche, **dadurch gekennzeichnet, dass** bei einer Umschaltung der Zufuhr eine Umschaltung eines Rücklaufs insbesondere zeitverzögert erfolgt.

8. Verfahren nach einem der vorstehenden Ansprüche, **dadurch gekennzeichnet, dass** zur Umschaltung der Zufuhr und/oder des Rücklaufs je ein Dreiwegeventil geschaltet wird.

9. Verfahren nach einem der vorstehenden Ansprüche, **dadurch gekennzeichnet, dass** in einem Störfall und/oder einem Ausfall der Steuerung und/oder bei Leerlaufen eines Pflanzenöltanks eine Umschaltung auf Diesel erfolgt.

10. Verfahren nach einem der vorstehenden Ansprüche, **dadurch gekennzeichnet, dass** die Drehzahl und/oder Motortemperatur mittels eines parametrierbaren Sondermoduls (PSM) erfasst wird.

11. Verfahren nach einem der vorstehenden Ansprüche, **dadurch gekennzeichnet, dass** eine Beheizung eines Pflanzenöltanks über einen Kühlkreislauf des Motors erfolgt.

12. Verfahren nach einem der vorstehenden Ansprüche, **dadurch gekennzeichnet, dass** eine Umschaltung von Pflanzenöl auf Dieselbetrieb erst erfolgt, wenn eine Grenzgeschwindigkeit erreicht oder überschritten wird und ein Umschalten von Diesel- auf Pflanzenölbetrieb dann erfolgt, wenn die Geschwindigkeit unterschritten wird, wobei die Geschwindigkeit im Bereich von 5 bis 30 km/h, bevorzugt im Bereich 7 bis 20 km/h und insbesondere bei 10 km/h liegt.

13. Verfahren nach einem der vorstehenden Ansprüche, **dadurch gekennzeichnet, dass** zur Umschaltung ein Messsignal von einem Antriebsstrang aufgenommen und/oder ausgewertet wird.

14. Verfahren nach einem der vorstehenden Ansprüche, **dadurch gekennzeichnet, dass** zum Umschalten ein Signal von
a. einem Getriebe,
b. einer Kardanwelle,
c. einem Differentialgetriebe,
d. einer Achse,
e. einem ABS-Modul,
f. einem Tachometer,
g. einem Sensors zur Messung einer Bewegung des Fahrzeugs gegenüber einem Untergrund und/oder
h. einem GPS-Gerät
aufgenommen und/oder ausgewertet wird.

15. Vorrichtung zum Steuern einer Kraftstoffzufuhr für einen Verbrennungsmotor für die kombinierte Nutzung von Pflanzenöl und Diesel als Kraftstoff, **dadurch gekennzeichnet, dass** ein Verfahren nach einem der vorstehenden Ansprüche eingesetzt wird.

16. Vorrichtung nach Anspruch 15, **dadurch gekennzeichnet, dass** ein Dreiwegeventil zum Anschließen einer Pflanzenöl- und Dieselzuleitung und/oder ein Dreiwegeventil zum Anschließen einer Pflanzenöl- und Dieselrückleitung vorgesehen ist.

17. Vorrichtung nach einem der Ansprüche 15 bis 16, **dadurch gekennzeichnet, dass** ein parametrierbares Sondermodul (PSM) zum Erfassen der Drehzahl vorhanden ist.

18. Vorrichtung nach einem der Ansprüche 15 bis 17, **dadurch gekennzeichnet, dass** ein Modul zum Erfassen einer Geschwindigkeit vorhanden ist.

19. Vorrichtung nach einem der Ansprüche 15 bis 18, **dadurch gekennzeichnet, dass** ein Pflanzenöltank und/oder eine oder mehrere Pflanzenölzuleitungen zum Beheizen mit mindestens einem Kühlkreislauf des Motors gekoppelt sind.

20. Motor mit einer Vorrichtung nach einem der Ansprüche 15 bis 19 und/oder einem Steuerverfahren nach einem der Ansprüche 1 bis 14.

21. Fahrzeug, insbesondere LKW, mit einem Steuerverfahren nach einem der Ansprüche 1 bis 14 und/oder einer Steuervorrichtung nach einem der Ansprüche 15 bis 19 und/oder einem Motor nach Anspruch 20.

22. Fahrzeug nach Anspruch 21, **dadurch gekennzeichnet, dass** ein Messmittel vorgesehen ist zum Messen und/oder Auswerten der Geschwindigkeit an
i. einem Getriebe,
j. einer Kardanwelle,
k. einem Differentialgetriebe, und/oder
l. einer Achse.

23. Fahrzeug nach einem der Ansprüche 21 bis 22, **dadurch gekennzeichnet, dass** ein Sensors zur Messung einer Bewegung des Fahrzeugs gegenüber einem Untergrund und/oder ein GPS-Gerät vorhanden ist.

24. Fahrzeug nach einem der Ansprüche 21 bis 23, **dadurch gekennzeichnet, dass** ein Auswertmittel vorgesehen ist zum Auswerten eines Geschwindigkeitssignals von einem ABS-Modul, einem Tachometer und/oder einem GPS - Gerät.
